# EUROPÄISCHE PATENTSCHRIFT

(11) **EP 4 124 018 B1**
(45) Veröffentlichungstag und Bekanntmachung des Hinweises auf die Patenterteilung: **02.12.2026**
(21) Anmeldenummer: 22185624.8
(22) Anmeldetag: 19.07.2022
(51) Int. Cl.: H04N 5/222, H04N 23/66

(54) **STEUEREINRICHTUNG FÜR EINE BEWEGTBILDKAMERA UND STEUERVERFAHREN**
CONTROL DEVICE FOR A MOVING IMAGE CAMERA AND CONTROL METHOD
DISPOSITIF DE COMMANDE POUR UNE CAMÉRA À IMAGE EN MOUVEMENT ET PROCÉDÉ DE COMMANDE

(30) Priorität: 23.07.2021 DE 102021119161
(43) Veröffentlichungstag der Anmeldung: 25.01.2023
(73) Patentinhaber: Arnold & Richter Cine Technik GmbH & Co. Betriebs KG, 80807 München (DE)
(72) Erfinder: KEIL, Karl, 10247 Berlin (DE); VOSS, Hendrik, 81371 München (DE)
(74) Vertreter: Manitz Finsterwald Patent- und Rechtsanwaltspartnerschaft mbB

(56) Entgegenhaltungen:
- EP-A1- 3 836 535
- JP-A- 2004 271 570
- JP-A- 2012 100 216
- JP-A- 2016 219 964
- JP-A- 2018 101 900
- JP-B2- 5 370 062
- US-A1- 2009 231 492

## Beschreibung

Die vorliegende Erfindung betrifft eine Steuereinrichtung für eine Bewegtbildkamera, die eine Aufnahmetaste und eine mit der Aufnahmetaste verbundene Steuerschaltung aufweist, und ein Steuerverfahren für eine Bewegtbildkamera, der eine Aufnahmetaste zugeordnet ist.

Bei kinematographischen Produktionen (auch als Filmproduktionen bezeichnet) werden herkömmliche oder elektronische Bewegtbildkameras eingesetzt. Eine digitale Bewegtbildkamera umfasst einen elektronischen Bildsensor zum Erzeugen von Bildsignalen sowie einen Signalausgang zum Ausgeben der Bildsignale und/oder einen Speicher zum Speichern der Bildsignale während einer Bewegtbildaufnahme. Der Bildsensor erzeugt die Bildsignale in Abhängigkeit von einfallendem Licht. Der Bildsensor kann eine zweidimensionale Matrix von lichtempfindlichen Sensorelementen aufweisen, insbesondere mit einer Farbfilteranordnung, beispielsweise nach dem Bayer-Muster (RGGB). Die Bewegtbildkamera kann ein integriertes Objektiv aufweisen, das eine Szene auf den Bildsensor abbildet, oder einen Objektivanschluss zum Befestigen eines Wechselobjektivs. Die genannten Einzelbilder können beispielsweise jeweilige Vollbilder sein, oder Halbbilder, die nur zusammen mit anderen Halbbildern einen vollständigen Bildinhalt enthalten.

Der Beginn und das Ende einer Bewegtbildaufnahme kann von einer Steuereinrichtung veranlasst werden, die integraler Teil der Bewegtbildkamera sein kann. Alternativ oder zusätzlich kann die Steuereinrichtung auch Teil einer von der Bewegtbildkamera separaten Fernsteuereinheit sein, wie dies aus DE 196 29 484 A1 bekannt ist. Eine derartige Fernsteuereinheit kann dazu vorgesehen sein, die Bewegtbildkamera für die Bewegtbildaufnahme anzusteuern und zusätzlich Aufnahmeparameter einzustellen, wie beispielsweise die Bildaufnahmefrequenz oder die Verschlusszeit der Kamera oder die Irisblendenöffnung, die Fokuslage (Schärfe) oder die Brennweite (Zoom-Faktor) des Kameraobjektivs. Die Steuereinrichtung kann eine Aufnahmetaste ("REC"-Taste) und eine hiermit verbundene Steuerschaltung aufweisen. In einem Toggle-Betrieb kann ein mehrmaliges manuelles Betätigen der Aufnahmetaste alternierend den Beginn und das Ende einer jeweiligen Bewegtbildaufnahme auslösen.

Bei kinematographischen Produktionen werden zunächst eine Vielzahl von Bewegtbildsequenzen und in der Regel auch von zugehörigen Tonsequenzen aufgenommen, wobei im Rahmen einer Nachproduktion eine Auswahl, Bearbeitung und Strukturierung des aufgenommenen Bild- und Tonmaterials erfolgt, um dem produzierten Film seine endgültige Form zu geben. Diese Nachbearbeitung wird auch als Filmschnitt oder synonym als Filmmontage, Montage oder Schnitt bezeichnet. Zur Durchführung des Filmschnitts ist es notwendig, die verschiedenen aufgenommenen Bewegtbildsequenzen bereits während der Aufnahme so zu kennzeichnen, dass diese während der späteren Nachbearbeitung problemlos identifiziert werden können.

Zur Kennzeichnung einer Bewegtbildsequenz, also einer Filmszene mit dem aufzuzeichnenden Motiv, wird häufig eine sogenannte Synchronklappe benutzt. Traditionelle Synchronklappen umfassen eine Tafel, welche mit den aufzuzeichnenden Identifizierungsinformationen beschriftet werden können. Ferner weist eine Synchronklappe zwei Balken auf, die aufeinandergeschlagen werden können, um ein Schlaggeräusch zu erzeugen. Hierdurch können Bild und Ton, sofern diese mit getrennten Geräten aufgezeichnet werden, synchronisiert werden. Falls dies nicht erforderlich ist, können die Identifizierungsinformationen auf einer einfachen Tafel (fachsprachlich: slate) vermerkt werden, die von der Bewegtbildkamera aufgenommen wird.

In der Regel wird die Synchronklappe oder Tafel mit den Identifizierungsinformationen zu Beginn der Aufnahme einer jeweiligen Bewegtbildsequenz in das Sichtfeld der Bewegtbildkamera gehalten. Die Synchronklappe oder Tafel wird anschließend wieder entfernt, so dass die Kamera nunmehr die eigentlich interessierende Bewegtbildsequenz aufnehmen kann.

In bestimmten Situationen ist diese Vorgehensweise jedoch nicht praktikabel. Beispielsweise kann die Kameraführung an einer unzugänglichen Stelle beginnen, etwa wenn die Bewegtbildkamera an einem Kran montiert ist und zu Beginn der aufzunehmenden Bewegtbildsequenz an einer unzugänglichen Stelle positioniert ist. In derartigen Fällen hat es sich als nützlich erwiesen, die Synchronklappe oder Tafel erst am Ende der aufzunehmenden Bewegtbildsequenz zu erfassen. Das heißt, die Kamera nimmt zunächst die eigentlich interessierende Bewegtbildsequenz auf, muss dann jedoch aktiviert bleiben, um noch innerhalb derselben Bewegtbildaufnahme auch die die Synchronklappe oder Tafel mit den Identifizierungsinformationen aufnehmen zu können. Bei dieser alternativen Vorgehensweise wird die Synchronklappe oder Tafel als Endklappe bezeichnet (fachsprachlich: tail slate). Bei dieser Vorgehensweise besteht allerdings die Gefahr, dass in der Praxis, z.B. aus Gewohnheit, die Bewegtbildaufnahme nach dem Erfassen der eigentlichen Bewegtbildsequenz versehentlich beendet wird und somit die Endklappe nicht mehr innerhalb der zugehörigen Bewegtbildaufnahme aufgezeichnet wird. Sofern dann die Kamera neuerlich aktiviert wird, um eine neue Bewegtbildaufnahme für die Synchronklappe oder Tafel mit den Identifizierungsinformationen zu beginnen, kann diese Aufnahme eventuell nicht mehr leicht der zugehörigen Bewegtbildsequenz zugeordnet werden, etwa weil für die neuerliche Aufnahme ein separates Datenpaket erzeugt und abgespeichert wird. In derartigen Fällen muss die Aufnahme der Endklappe nachträglich der eigentlichen Bewegtbildsequenz manuell zugeordnet werden.

JP 2018 101900 A offenbart eine tragbare Kamera, die eine Aufnahmetaste und eine mit der Aufnahmetaste verbundene Steuerschaltung umfasst. In einer Ausführungsform kann eine Videoaufnahme durch ein "kurzes" Drücken der Aufnahmetaste gestartet werden, und durch ein "langes" Drücken der Aufnahmetaste wieder gestoppt werden. In einer alternativen Ausführungsform kann eine Videoaufnahme durch ein "ungeradzahliges" Drücken der Aufnahmetaste gestartet werden und durch ein "geradzahliges" Drücken des Aufnahmetaste wieder beendet werden. In der JP 2012 100216 A ist eine Kamera beschrieben, bei der anstelle der Verwendung einer herkömmlichen Synchronklappe ein gespeichertes Synchronbild in die Videoaufzeichnung eingefügt wird und ein Lautsprecher einen Synchronton erzeugt, der von einem Mikrofon der Kamera erfasst wird, um eine zeitliche Zuordnung zu ermöglichen. JP 5 370062 B2 beschreibt eine Kamera, bei der durch ein "kurzes" oder "langes" Drücken eines Knopfes ausgewählt werden kann, ob ein Bild oder ein Video aufgenommen werden soll. JP 2016 219964 A offenbart eine tragbare Kamera, bei der durch "kurzes" Drücken einer Aufnahmetaste eine Videoaufnahme gestartet und durch "langes" Drücken wieder gestoppt werden kann. EP 3 836 535 A1 betrifft eine digitale Bewegtbildkamera, bei welcher eine Identifizierungsbilddatensatz (digitale Synchronklappe) zwischengespeichert und in einen nachfolgend erzeugten Sequenzdatenstrom eingefügt wird, sodass das oder die Szenen-Identifizierungsbild(er) dem nachfolgend erzeugten Sequenzdatenstrom mit den aufeinanderfolgenden Einzelbildern vorangestellt ist/sind. JP 2004 271570 A offenbart eine Digitalkamera, die dazu ausgebildet ist, ein zuverlässiges Fotografieren zu ermöglichen, ohne eine Fehlbedienung zu verursachen, indem entweder bestimmte Bedieneingaben nicht zugelassen werden oder mehreren Bedienschaltern eine Auslösefunktion zugewiesen wird.

Es ist eine Aufgabe der Erfindung, eine Steuereinrichtung für eine Bewegtbildkamera und ein entsprechendes Steuerverfahren anzugeben, die ein Aufnehmen der Endklappe nach der eigentlichen Bewegtbildsequenz innerhalb derselben Bewegtbildaufnahme wie die Bewegtbildsequenz gewährleisten.

Die Lösung dieser Aufgabe erfolgt durch eine Steuereinrichtung und ein Verfahren mit den Merkmalen der unabhängigen Ansprüche.

Gemäß einem ersten Aspekt der Erfindung weist eine Steuereinrichtung für eine Bewegtbildkamera eine Aufnahmetaste und eine mit der Aufnahmetaste verbundene Steuerschaltung auf. Die Steuerschaltung ist dazu ausgebildet, in Ansprechen auf eine erste Betätigung der Aufnahmetaste einen Beginn einer Bewegtbildaufnahme zu veranlassen. Ferner ist die Steuereinrichtung dazu ausgebildet, in einem Normalaufnahmemodus in Ansprechen auf eine zweite Betätigung der Aufnahmetaste eine Beendigung der Bewegtbildaufnahme zu veranlassen. In einem Endklappenmodus hingegen veranlasst die Steuerschaltung die Beendigung der Bewegtbildaufnahme lediglich dann, wenn zunächst eine zweite Betätigung der Aufnahmetaste und danach eine dritte Betätigung der Aufnahmetaste erfolgen. Die Steuerschaltung ist ferner dazu ausgebildet, für eine jeweilige Bewegtbildaufnahme wahlweise den Normalaufnahmemodus oder den Endklappenmodus einzunehmen. Die Steuerschaltung ist dazu ausgebildet, in Ansprechen auf eine Benutzereingabe, die der ersten Betätigung der Aufnahmetaste entspricht, wahlweise den Endklappenmodus einzunehmen.

Hierfür kann bei einigen Ausführungsformen durch die Benutzereingabe zwischen dem Normalaufnahmemodus und dem Endklappenmodus ausgewählt werden. Bei anderen Ausführungsformen kann der Normalaufnahmemodus voreingestellt sein, wobei der Endklappenmodus infolge einer Benutzereingabe wahlweise eingenommen wird. Somit kann der Benutzer (direkt oder indirekt) den gewünschten Modus auswählen.

Die Auswahl, ob sich die Steuerschaltung bzw. die Bewegtbildkamera im Normalaufnahmemodus oder im Endklappenmodus befindet, kann durch den Benutzer (Kameramann, Kameraassistent oder Schärfezieher) durch eine Benutzereingabe erfolgen. Diese Eingabe erfolgt mit der Betätigung der Aufnahmetaste. Die Auswahl, ob der Normalaufnahmemodus oder der Endklappenmodus eingenommen wird, erfolgt durch die erste Betätigung der Aufnahmetaste selbst, wie nachfolgend erläutert wird.

Die Steuerschaltung ist dazu ausgebildet, ausgehend von einem Bereitschaftszustand in Ansprechen auf die erste Betätigung der Aufnahmetaste den Normalaufnahmemodus einzunehmen, wenn die Dauer der ersten Betätigung kürzer ist als eine vorbestimmte Langbetätigungsdauer, und hingegen den Endklappenmodus einzunehmen, wenn die Dauer der ersten Betätigung mindestens der vorbestimmten Langbetätigungsdauer entspricht.

Die Aufnahmetaste kann eine von einem Benutzer betätigbare Taste sein und kann auch als "REC"-Taste bezeichnet werden. Die Aufnahmetaste kann mit der Steuerschaltung zumindest signaltechnisch verbunden sein und kann direkt an der Bewegtbildkamera oder an einem räumlich von der Bewegtbildkamera entfernten Ort angebracht sein, z.B. an einer der Bewegtbildkamera zugeordneten Fernsteuereinheit.

Die Steuereinrichtung kann sich vor einer jeweiligen Bewegtbildaufnahme in einem Bereitschaftszustand befinden (eingeschaltet und bereit für eine Bewegtbildaufnahme). Für eine jeweilige Bewegtbildaufnahme kann die Steuerschaltung wahlweise den Normalaufnahmemodus oder den Endklappenmodus einnehmen, insbesondere aufgrund der entsprechenden Benutzereingabe, also aufgrund einer Auswahl durch den Benutzer. Die beiden Modi unterscheiden sich in der Weise, wie eine Beendigung der Bewegtbildaufnahme herbeigeführt werden kann, um eine versehentliche zu frühe Beendigung zu vermeiden. Der Endklappenmodus bezeichnet eine Sonderbetriebsart, in der nach der eigentlichen Bewegtbildsequenz noch eine Endklappe innerhalb derselben Bewegtbildaufnahme aufgezeichnet werden soll.

In dem Normalaufnahmemodus kann die Bewegtbildaufnahme (wie üblich) durch eine erste Betätigung der Aufnahmetaste gestartet werden. Insbesondere kann die Steuerschaltung hierfür ein Aufnahmebeginn-Steuersignal erzeugen (z.B. für eine übergeordnete Steuereinheit der Kamera oder eine andere Instanz der Steuerschaltung selbst), aufgrund dessen die von dem Bildsensor der Bewegtbildkamera erzeugten Bildsignale ausgegeben und/oder gespeichert werden. Das Betätigen der Aufnahmetaste kann beispielsweise durch einen Kameramann, einen Kameraassistenten oder einen Schärfezieher erfolgen. Wenn die Steuerschaltung den Normalaufnahmemodus einnimmt, kann die Aufnahme (wie üblich) durch eine zweite Betätigung der Aufnahmetaste wieder beendet werden. Bei dieser zweiten Betätigung der Aufnahmetaste kann es sich insbesondere um diejenige Betätigung der Aufnahmetaste handeln, die ersten Betätigung der Aufnahmetaste als nächstes folgt. Insbesondere kann die Steuerschaltung hierfür ein Aufnahmeende-Steuersignal erzeugen (z.B. für die übergeordnete Steuereinheit oder andere Instanz der Steuerschaltung), aufgrund dessen die Ausgabe oder Speicherung der Bildsignale beendet wird.

In dem Endklappenmodus der Steuerschaltung kann der Beginn einer Aufnahme einer Bewegtbildsequenz generell in gleicher Weise erfolgen wie im Normalaufnahmemodus, d.h. durch eine erste Betätigung der Aufnahmetaste. Hierbei ist vorgesehen, dass durch eine besonders lange erste Betätigung der Aufnahmetaste der Endklappenmodus überhaupt erst ausgewählt wird. In dem Endklappenmodus endet die Bewegtbildaufnahme jedoch nicht auf ein zweites Betätigen der Aufnahmetaste (wie im Normalaufnahmemodus), sondern es ist eine dritte Betätigung der Aufnahmetaste nötig, die zeitlich nach der zweiten Betätigung der Aufnahmetaste erfolgt, um die Bewegtbildaufnahme zu beenden. Dies hat den Vorteil, dass nach dem Aufnehmen der eigentlichen Bewegtbildsequenz das Aufnehmen der Endklappe nicht versehentlich, nämlich durch vorzeitige Beendigung der Bewegtbildaufnahme, vergessen wird. Vielmehr muss nach dem zweiten Betätigen der Aufnahmetaste - entgegen der üblichen Praxis - eine dritte Betätigung der Aufnahmetaste erfolgen, was eine bewusste Handlung des Benutzers erfordert. Somit kann nicht leicht übersehen werden, dass vor der Beendigung der Bewegtbildaufnahme noch die Endklappe (in derselben Aufnahme wie die Bewegtbildsequenz) aufgezeichnet werden muss.

Die erfindungsgemäße Steuerschaltung kann beispielsweise einen integrierten Schaltkreis (IC), einen Mikroprozessor, eine zentrale Recheneinheit (CPU), eine Anwendungsspezifische Integrierte Schaltung (ASIC) oder ein Field Programmable Gate Array (FPGA) umfassen. Die Aufnahmetaste kann beispielsweise einen rückfedernden Druckschalter umfassen.

Weitere Ausführungsformen der Erfindung sind nachfolgend und in den abhängigen Ansprüchen genannt.

Der Bereitschaftszustand der Bewegtbildkamera kann beispielsweise durch ein Einschalten der Bewegtbildkamera herbeigeführt werden. Das Einschalten kann beispielsweise über eine "EIN-/AUS"-Taste erfolgen. Im Bereitschaftszustand erfolgt noch keine Bewegtbildaufnahme. Die Langbetätigungsdauer entspricht einem Schwellenwert für das Einnehmen des Endklappenmodus. Die Langbetätigungsdauer kann einen vorbestimmten Wert einer Zeitdauer besitzen, welche die erste Betätigung der Aufnahmetaste mindestens besitzen muss, damit nicht nur der Beginn einer Bewegtbildaufnahme veranlasst wird, sondern der Endklappenmodus eingestellt wird. Wenn hingegen die erste Betätigung der Aufnahmetaste kürzer dauert als die Langbetätigungsdauer, nimmt die Steuerschaltung den Normalaufnahmemodus ein oder behält den Normalaufnahmemodus (insbesondere als Voreinstellung) bei. Somit kann der Benutzer bei der ersten Betätigung der Aufnahmetaste (für das Beginnen der Bewegtbildaufnahme) zugleich den gewünschten Modus auswählen, nämlich durch eine relativ kurze oder eine relativ lange Betätigung der Aufnahmetaste. Die Langbetätigungsdauer kann insbesondere einen Wert aus dem Bereich 1 bis 4 Sekunden besitzen, beispielsweise den Wert 1 Sekunde oder 1,5 Sekunden oder 2 Sekunden oder 3 Sekunden.

Bei einigen Ausführungsformen kann die Steuereinrichtung dazu ausgebildet sein, ein Endklappenmodus-Anzeigesignal zu erzeugen, wenn die Steuereinrichtung den Endklappenmodus einnimmt. Hierdurch kann einem Benutzer signalisiert werden, dass der Endklappenmodus aktiviert ist, insbesondere während der gesamten Bewegtbildaufnahme. Das Endklappenmodus-Anzeigesignal kann an einer Ausgabeeinrichtung der Steuereinrichtung ausgegeben oder angezeigt werden, beispielsweise als ein optischer Modushinweis, insbesondere an der nachfolgend noch erläuterten Ausgabeeinrichtung. Der optische Modushinweis kann beispielsweise als ein Symbol einer umgekehrten Klappe visualisiert sein.

Bei einigen Ausführungsformen kann die Steuerschaltung dazu ausgebildet sein, in dem Endklappenmodus in Ansprechen auf die zweite Betätigung der Aufnahmetaste ein Warnsignal zu erzeugen. In dem Endklappenmodus führt die zweite Betätigung der Aufnahmetaste - wie erläutert - noch nicht zu einem Beenden der Bewegtbildaufnahme, damit der Benutzer nicht vergisst, nach der eigentlichen Bewegtbildsequenz noch die Endklappe (Synchronklappe oder Tafel mit Identifizierungsinformationen) aufzunehmen. Um hieran zu erinnern, kann die Steuerschaltung ein Warnsignal erzeugen, das auf vielfältige Weise ausgegeben werden kann, um von dem Benutzer wahrgenommen zu werden. Das Warnsignal kann somit das Vorliegen des Endklappenmodus repräsentieren und den Benutzer daran erinnern, dass der Endklappenmodus aktiv, d.h. eingenommen, ist.

Bei einer derartigen Ausführungsform kann die Steuereinrichtung eine optische, akustische oder haptische Ausgabeeinrichtung aufweisen, die dazu ausgebildet ist, in Ansprechen auf das Warnsignal der Steuerschaltung einen optischen, akustischen oder haptischen Warnhinweis auszugeben. Beispielsweise kann an der Bewegtbildkamera und/oder der Fernsteuereinheit ein Lautsprecher vorhanden sein, und der Warnhinweis kann ein von dem Lautsprecher erzeugtes akustisch wahrnehmbares Tonsignal umfassen. Zusätzlich oder alternativ kann die Bewegtbildkamera und/oder die Fernsteuereinheit eine Vibrationseinheit umfassen, die den Warnhinweis durch ein Vibrieren der Vibrationseinheit dem Benutzer haptisch signalisiert. Ein optischer Warnhinweis kann durch einen optischen Signalgeber, beispielsweise eine Leuchtdiode, an der Bewegtbildkamera und/oder der Fernsteuereinheit ausgegeben werden oder in Textform und/oder grafischer Form an einer Ausgabeeinrichtung der Bewegtbildkamera und/oder der Fernsteuereinheit angezeigt werden. Ein optischer Warnhinweis kann beispielsweise auch in Textform und/oder grafischer Form an einem Suchermonitor der Bewegtbildkamera angezeigt werden.

In dem Endklappenmodus kann die dritte Betätigung der Aufnahmetaste unmittelbar zu der Beendigung der Bewegtbildaufnahme führen. Alternativ hierzu kann bei einigen Ausführungsformen die Steuerschaltung dazu ausgebildet sein, in dem Endklappenmodus die Beendigung der Bewegtbildaufnahme lediglich dann zu veranlassen, wenn die Dauer der dritten Betätigung der Aufnahmetaste - oder erforderlichenfalls einer weiteren Betätigung der Aufnahmetaste - mindestens einer relativ langen Betätigungsdauer entspricht, die größer ist als eine relativ kurze Betätigungsdauer, welche in dem Normalaufnahmemodus ausreichend ist, damit die zweite Betätigung der Aufnahmetaste die Beendigung der Bewegtbildaufnahme bewirkt. Bei dieser Ausführungsform ist somit nach der zweiten Betätigung der Aufnahmetaste eine weitere Betätigung (dritte oder vierte etc.) mit mindestens der relativ langen Betätigungsdauer erforderlich. Die genannte relativ lange Betätigungsdauer entspricht somit einem Schwellenwert für das Beenden der Bewegtbildaufnahme in dem Endklappenmodus. Die relativ lange Betätigungsdauer kann einen vorbestimmten Wert einer Zeitdauer besitzen, welche die dritte oder weitere Betätigung der Aufnahmetaste mindestens besitzen muss, damit in dem Endklappenmodus die Beendigung der Bewegtbildaufnahme erfolgt, wohingegen in dem Normalaufnahmemodus eine kürzere Zeitdauer der zweiten Betätigung der Aufnahmetaste ausreichend ist (nämlich die genannte relativ kurze Betätigungsdauer), damit die Beendigung der Bewegtbildaufnahme erfolgt. Somit führt in dem Endklappenmodus auch ein mehrmaliges relativ kurzes Betätigen der Aufnahmetaste nicht zu einer versehentlichen Beendigung der Bewegtbildaufnahme, sondern der Benutzer muss die Aufnahmetaste bewusst während einer außergewöhnlich langen Zeitdauer gedrückt halten. Die genannte relativ lange Betätigungsdauer kann der bereits erläuterten vorbestimmten Langbetätigungsdauer entsprechen, und/oder die genannte relativ kurze Betätigungsdauer kann der bereits erläuterten vorbestimmten Kurzbetätigungsdauer entsprechen. Die relativ lange Betätigungsdauer kann insbesondere einen Wert aus dem Bereich 1 bis 4 Sekunden besitzen, beispielsweise den Wert 1 Sekunde oder 1,5 Sekunden oder 2 Sekunden oder 3 Sekunden. Die relativ kurze Betätigungsdauer kann insbesondere einen Wert besitzen, der geringer ist als die jeweilige relativ lange Betätigungsdauer.

Gemäß einem zweiten Aspekt der Erfindung weist eine Steuereinrichtung für eine Bewegtbildkamera eine Aufnahmetaste und eine mit der Aufnahmetaste verbundene Steuerschaltung auf. Die Steuerschaltung ist dazu ausgebildet, in Ansprechen auf eine erste Betätigung der Aufnahmetaste einen Beginn einer Bewegtbildaufnahme zu veranlassen. Ferner ist die Steuereinrichtung dazu ausgebildet, in einem Normalaufnahmemodus in Ansprechen auf eine zweite Betätigung der Aufnahmetaste eine Beendigung der Bewegtbildaufnahme zu veranlassen, wobei es ausreichend ist, wenn die Dauer der zweiten Betätigung einer vorbestimmten Kurzbetätigungsdauer entspricht. In einem Endklappenmodus hingegen veranlasst die Steuerschaltung die Beendigung der Bewegtbildaufnahme in Ansprechen auf eine zweite oder weitere Betätigung der Aufnahmetaste lediglich dann, wenn die Dauer der zweiten oder weiteren Betätigung mindestens einer vorbestimmten Langbetätigungsdauer entspricht, die größer ist als die vorbestimmte Kurzbetätigungsdauer. Die Steuerschaltung ist ferner dazu ausgebildet, für eine jeweilige Bewegtbildaufnahme wahlweise den Normalaufnahmemodus oder den Endklappenmodus einzunehmen. Die Steuerschaltung ist ferner dazu ausgebildet, in Ansprechen auf eine Benutzereingabe, die der ersten Betätigung der Aufnahmetaste entspricht, wahlweise den Endklappenmodus einzunehmen.

Die im Zusammenhang mit dem ersten Erfindungsaspekt erläuterten Vorteile und Ausführungsformen gelten analog auch für den zweiten Erfindungsaspekt.

Insbesondere kann die Aufnahmetaste eine von einem Benutzer betätigbare Taste sein (z.B. an der Bewegtbildkamera oder an einer zugeordneten Fernsteuereinheit). Die Steuereinrichtung kann sich vor einer jeweiligen Bewegtbildaufnahme in einem Bereitschaftszustand befinden. Für eine jeweilige Bewegtbildaufnahme kann die Steuerschaltung wahlweise den Normalaufnahmemodus oder den Endklappenmodus einnehmen, insbesondere aufgrund der entsprechenden Benutzereingabe, also aufgrund einer Auswahl durch den Benutzer.

In dem Normalaufnahmemodus kann die Bewegtbildaufnahme durch eine erste Betätigung der Aufnahmetaste gestartet werden, wobei die Steuerschaltung insbesondere ein Aufnahmebeginn-Steuersignal erzeugen kann. Wenn die Steuerschaltung den Normalaufnahmemodus einnimmt, kann die Aufnahme (wie üblich) durch eine zweite Betätigung der Aufnahmetaste wieder beendet werden, wobei es ausreichend ist, wenn die Dauer der zweiten Betätigung relativ kurz ist (mindestens einer vorbestimmten Kurzbetätigungsdauer entsprechend). Die Steuerschaltung kann hierfür ein Aufnahmeende-Steuersignal erzeugen.

In dem Endklappenmodus der Steuerschaltung hingegen endet die Bewegtbildaufnahme jedoch erst, wenn eine zweite oder weitere Betätigung der Aufnahmetaste eine Dauer besitzt, die mindestens einer vorbestimmten Langbetätigungsdauer entspricht, wobei diese Langbetätigungsdauer größer ist als die vorbestimmte Kurzbetätigungsdauer des Normalaufnahmemodus. Dies hat den Vorteil, dass nach dem Aufnehmen der eigentlichen Bewegtbildsequenz das Aufnehmen der Endklappe nicht versehentlich, nämlich durch vorzeitige Beendigung der Bewegtbildaufnahme, vergessen wird. Vielmehr muss der Benutzer die Aufnahmetaste bewusst während einer außergewöhnlich langen Zeitdauer gedrückt halten, um eine Beendigung der Bewegtbildaufnahme herbeizuführen. Somit kann nicht leicht übersehen werden, dass vor der Beendigung der Bewegtbildaufnahme noch die Endklappe (in derselben Bewegtbildaufnahme wie die Bewegtbildsequenz) aufgezeichnet werden muss.

Die Langbetätigungsdauer kann insbesondere einen Wert aus dem Bereich 1 bis 4 Sekunden besitzen, beispielsweise den Wert 1 Sekunde oder 1,5 Sekunden oder 2 Sekunden oder 3 Sekunden. Die Kurzbetätigungsdauer kann insbesondere einen Wert besitzen, der größer ist als Null Sekunden (beispielsweise 0,1 Sekunden), d.h. bezüglich der Kurzbetätigungsdauer ist es vor allem wichtig, eine bewusste Betätigung der Aufnahmetaste zuverlässig detektieren zu können, um in dem Normalaufnahmemodus die Bewegtbildaufnahme zu beenden. Die hierfür erforderliche Kurzbetätigungsdauer ist jedoch kürzer (vorzugsweise deutlich kürzer) als die Langbetätigungsdauer, die in dem Endklappenmodus erforderlich ist, um die Bewegtbildaufnahme zu beenden.

Auch bei dem zweiten Erfindungsaspekt ist die Steuerschaltung dazu ausgebildet, in Ansprechen auf eine Benutzereingabe, die der ersten Betätigung der Aufnahmetaste entspricht, wahlweise den Endklappenmodus einzunehmen. Hierfür kann bei einigen Ausführungsformen durch die Benutzereingabe zwischen dem Normalaufnahmemodus und dem Endklappenmodus ausgewählt werden. Bei anderen Ausführungsformen kann der Normalaufnahmemodus voreingestellt sein, wobei der Endklappenmodus infolge einer Benutzereingabe wahlweise eingenommen wird. Somit kann der Benutzer (direkt oder indirekt) den gewünschten Modus auswählen.

Die Steuerschaltung ist dazu ausgebildet, ausgehend von einem Bereitschaftszustand in Ansprechen auf die erste Betätigung der Aufnahmetaste den Normalaufnahmemodus einzunehmen, wenn die Dauer der ersten Betätigung kürzer ist als die vorbestimmte Langbetätigungsdauer, und hingegen den Endklappenmodus einzunehmen, wenn die Dauer der ersten Betätigung mindestens der vorbestimmten Langbetätigungsdauer entspricht.

Bei einigen Ausführungsformen kann die Steuereinrichtung dazu ausgebildet sein, ein Endklappenmodus-Anzeigesignal zu erzeugen, wenn die Steuereinrichtung den Endklappenmodus einnimmt. Hierdurch kann einem Benutzer signalisiert werden, dass der Endklappenmodus aktiviert ist.

Bei einigen Ausführungsformen kann die Steuerschaltung dazu ausgebildet sein, in dem Endklappenmodus in Ansprechen auf die zweite oder weitere Betätigung der Aufnahmetaste ein Warnsignal zu erzeugen, wenn die Dauer der zweiten oder weiteren Betätigung kürzer ist als die vorbestimmte Langbetätigungsdauer. In dem Endklappenmodus führt eine zu kurze zweite oder weitere Betätigung der Aufnahmetaste - wie erläutert - noch nicht zu einem Beenden der Bewegtbildaufnahme, damit der Benutzer nicht vergisst, nach der eigentlichen Bewegtbildsequenz noch die Endklappe (Synchronklappe oder Tafel mit Identifizierungsinformationen) aufzunehmen. Um hieran zu erinnern, kann die Steuerschaltung ein Warnsignal erzeugen, das auf vielfältige Weise ausgegeben werden kann, um von dem Benutzer wahrgenommen zu werden.

Bei einer derartigen Ausführungsform kann die Steuereinrichtung eine optische, akustische oder haptische Ausgabeeinrichtung aufweisen, die dazu ausgebildet sein kann, in Ansprechen auf das Warnsignal einen optischen, akustischen oder haptischen Warnhinweis auszugeben.

Die Erfindung bezieht sich auch auf eine Bewegtbildkamera mit einer Steuereinrichtung der erläuterten Art (gemäß dem ersten oder zweiten Erfindungsaspekt).

Die Bewegtbildkamera kann ein integriertes optisches System (Kameraobjektiv) oder einen Objektivanschluss zum Montieren eines Wechselobjektivs umfassen. Ferner kann die Bewegtbildkamera einen elektronischen Bildsensor zum Erzeugen von Bildsignalen aus einfallendem Licht aufweisen. Außerdem kann die Bewegtbildkamera eine Bildsignalverarbeitungseinrichtung zum Erzeugen eines digitalen Bilddatenstroms aus den Bildsignalen umfassen.

Die Bewegtbildkamera kann einen Signalausgang und/oder einen Speicher zum Ausgeben oder Speichern der Bildsignale während der Bewegtbildaufnahme aufweisen.

Die Erfindung bezieht sich ferner auf eine Fernsteuereinheit für eine Bewegtbildkamera, mit einer Steuereinrichtung der erläuterten Art (gemäß dem ersten oder zweiten Erfindungsaspekt).

Eine derartige Fernsteuereinheit kann dazu ausgebildet sein, eine herkömmliche oder elektronische Bewegtbildkamera zum Aufnehmen von Bewegtbildaufnahmen anzusteuern und/oder Aufnahmeparameter einzustellen, wie beispielsweise die Bildaufnahmefrequenz oder die Verschlusszeit der Kamera, oder die Irisblendenöffnung, die Fokuslage (Schärfe) oder die Brennweite (Zoom-Faktor).

Die Fernsteuereinheit kann ein Basisteil und ein relativ zu dem Basisteil bewegliches Bedienelement, z.B. ein Stellrad, zum Einstellen von Objektivsteuerbefehlen gemäß der Drehstellung aufweisen, wobei die Fernsteuereinheit entsprechende Objektivsteuersignale erzeugt und an die Bewegtbildkamera oder entsprechende Objektivstellmotoren der Kamera übermittelt.

Die Erfindung bezieht sich auch auf ein Verfahren zum Steuern einer Bewegtbildkamera, der eine Aufnahmetaste zugeordnet ist. Das Verfahren umfasst entsprechend dem ersten Erfindungsaspekt folgende Schritte: Beginnen einer Bewegtbildaufnahme in Ansprechen auf eine erste Betätigung der Aufnahmetaste; Beenden der Bewegtbildaufnahme in Ansprechen auf eine zweite Betätigung der Aufnahmetaste, falls ein Normalaufnahmemodus eingenommen ist; und Beenden der Bewegtbildaufnahme lediglich in Ansprechen auf eine zweite Betätigung und eine nachfolgende dritte Betätigung der Aufnahmetaste, falls ein Endklappenmodus eingenommen ist, wobei für eine jeweilige Bewegtbildaufnahme wahlweise der Normalaufnahmemodus oder der Endklappenmodus eingenommen wird.

In Ansprechen auf eine Benutzereingabe, die der ersten Betätigung der Aufnahmetaste entspricht, wird wahlweise der Endklappenmodus eingenommen. Hierfür kann bei einigen Ausführungsformen zwischen dem Normalaufnahmemodus und dem Endklappenmodus ausgewählt werden. Bei anderen Ausführungsformen kann der Normalaufnahmemodus voreingestellt sein, wobei der Endklappenmodus infolge der Benutzereingabe wahlweise eingenommen wird.

Ausgehend von einem Bereitschaftszustand wird in Ansprechen auf die erste Betätigung der Aufnahmetaste der Normalaufnahmemodus eingenommen, wenn die Dauer der ersten Betätigung kürzer ist als eine vorbestimmte Langbetätigungsdauer, und es wird hingegen der Endklappenmodus eingenommen, wenn die Dauer der ersten Betätigung mindestens der vorbestimmten Langbetätigungsdauer entspricht.

Die im Zusammenhang mit der Steuereinrichtung gemäß dem ersten Erfindungsaspekt erläuterten Vorteile und weiteren Ausführungsformen gelten analog auch für das Steuerverfahren.

Die Erfindung bezieht sich ferner auf ein Verfahren zum Steuern einer Bewegtbildkamera, der eine Aufnahmetaste zugeordnet sein kann, wobei das Verfahren entsprechend dem zweiten Erfindungsaspekt die folgenden Schritte umfasst: Beginnen einer Bewegtbildaufnahme in Ansprechen auf eine erste Betätigung der Aufnahmetaste; und - falls ein Normalaufnahmemodus eingenommen ist - Beenden der Bewegtbildaufnahme in Ansprechen auf eine zweite Betätigung der Aufnahmetaste, wobei es ausreichend ist, wenn die Dauer der zweiten Betätigung einer vorbestimmten Kurzbetätigungsdauer entspricht; und - falls ein Endklappenmodus eingenommen ist - Beenden der Bewegtbildaufnahme in Ansprechen auf eine zweite oder weitere Betätigung der Aufnahmetaste lediglich dann, wenn die Dauer der zweiten oder weiteren Betätigung mindestens einer vorbestimmten Langbetätigungsdauer entspricht, die größer ist als die vorbestimmte Kurzbetätigungsdauer; wobei für eine jeweilige Bewegtbildaufnahme wahlweise der Normalaufnahmemodus oder der Endklappenmodus eingenommen wird.

In Ansprechen auf eine Benutzereingabe, die der ersten Betätigung der Aufnahmetaste entspricht, wird wahlweise der Endklappenmodus eingenommen. Hierfür kann bei einigen Ausführungsformen zwischen dem Normalaufnahmemodus und dem Endklappenmodus ausgewählt werden. Bei anderen Ausführungsformen kann der Normalaufnahmemodus voreingestellt sein, wobei der Endklappenmodus infolge der Benutzereingabe wahlweise eingenommen wird.

Ausgehend von einem Bereitschaftszustand wird in Ansprechen auf die erste Betätigung der Aufnahmetaste der Normalaufnahmemodus eingenommen, wenn die Dauer der ersten Betätigung kürzer ist als die vorbestimmte Langbetätigungsdauer, und es wird hingegen der Endklappenmodus eingenommen, wenn die Dauer der ersten Betätigung mindestens der vorbestimmten Langbetätigungsdauer entspricht.

Die im Zusammenhang mit der Steuereinrichtung gemäß dem zweiten Erfindungsaspekt erläuterten Vorteile und weiteren Ausführungsformen gelten analog auch für das Steuerverfahren.

Die Erfindung wird nachfolgend anhand von Ausführungsbeispielen mit Bezug auf die Zeichnungen beschrieben.
- Fig. 1: zeigt eine schematische Darstellung einer Bewegtbildkamera mit einer Steuereinrichtung und einer Aufnahmetaste.
- Fig. 2: zeigt eine beispielhafte Darstellung einer Fernsteuereinheit für eine Bewegtbildkamera mit einer Steuereinrichtung und einer Aufnahmetaste.
- Fig. 3: zeigt ein Flussdiagramm für ein Verfahren zum Steuern einer Bewegtbildkamera.
- Fig. 4: zeigt ein Flussdiagramm für ein alternatives Verfahren zum Steuern einer Bewegtbildkamera.

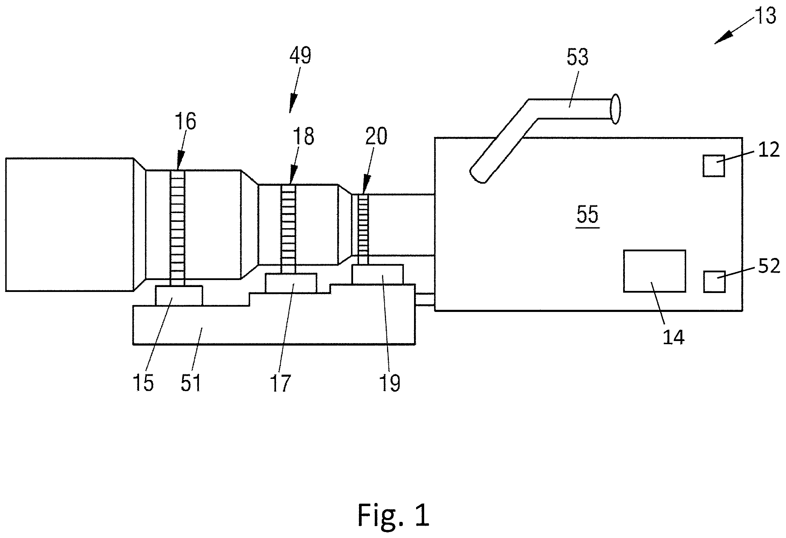

Fig. 1 zeigt eine Bewegtbildkamera 13 mit einem Kamerakörper 55, an welchem ein Wechselobjektiv 49 montiert ist. Dieses Wechselobjektiv 49 weist drei Objektivringe 16, 18 und 20 auf, die mittels jeweiliger externer Objektiv-Stellmotoren 15, 17 und 19 verstellt werden können. Beispielsweise kann dabei der erste Objektivring 16 dazu vorgesehen sein, die Fokusentfernung des Objektivs 49 einzustellen, während durch Drehen des zweiten Objektivrings 18 beispielsweise eine gewünschte Brennweiteneinstellung vorgenommen werden kann. Ferner kann der dritte Objektivring 20 insbesondere vorgesehen sein, um mittels des zugeordneten dritten Objektiv-Stellmotors 19 eine Irisblendenöffnung einstellen zu können. Die Stellmotoren 15, 17 und 19 sind dabei Teil einer Objektivring-Antriebseinheit 51, welche mit dem Kamerakörper 55 verbunden ist (z.B. über Haltestangen). Die Objektivring-Antriebseinheit 51 kann eine Kommunikationsschnittstelle zum Empfangen von Stellmotor-Steuersignalen umfassen.

Ferner ist an dem Kamerakörper 55 ein Sucher 53 angeordnet, mittels dessen ein die Bewegtbildkamera 13 führender Kameramann einen aufzunehmenden Bildausschnitt anvisieren kann. Die Bewegtbildkamera 13 umfasst darüber hinaus eine Aufnahmetaste 12, eine Steuerschaltung 14 und eine optische Ausgabeeinrichtung 52.

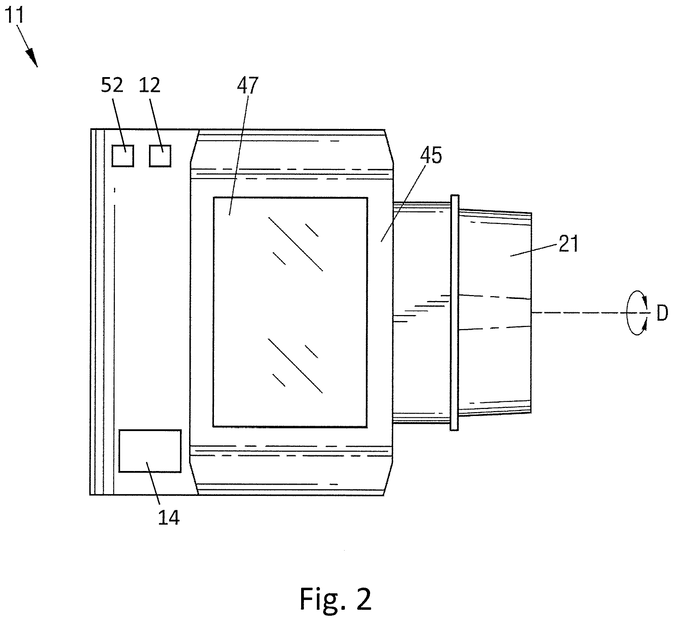

Während einer Aufnahme einer Szene ist es in der Regel vorgesehen, dass die Kamera 13 bzw. deren Objektiv 49 von einem Kameramann bewegt wird, um einen jeweiligen aufzunehmenden Bildausschnitt anzuvisieren. Entsprechende Anpassungen der Aufnahmeparameter, die bei einer solchen Änderung des Bildausschnitts möglicherweise vorzunehmen sind, beispielsweise der Fokusentfernung, werden hingegen meist von einem Kameraassistenten oder Schärfezieher mittels einer Fernsteuereinheit 11 vorgenommen, deren mögliche Ausbildung in Fig. 2 veranschaulicht ist.

Dabei dient die hier dargestellte Bewegtbildkamera 13 mit dem Objektiv 49 lediglich der Veranschaulichung. Grundsätzlich kann die Fernsteuereinheit 11 auch dazu ausgebildet sein, andersartige Bewegtbildkameras 13 bzw. andersartige Objektive 49 ferngesteuert einzustellen, welche anstelle der von außen drehbaren Objektivringe 16, 18, 20 für die externen Stellmotoren 15, 17, 19 beispielsweise integrierte Objektiv-Stellmotoren aufweisen können.

Die in Fig. 2 gezeigte Fernsteuereinheit 11 weist ein Bedienelement 21 auf, welches als Stellrad ausgebildet und relativ zu einem Basisteil 45 um eine Drehachse D drehbar ist. Durch Drehen des Bedienelements 21 bzw. Verändern dessen Drehstellung relativ zu dem Basisteil 45 können dabei Steuerbefehle für die Kamera 13 eingestellt werden, die als Stellmotor-Steuersignale an die Bewegtbildkamera 13 bzw. an die zugeordnete Objektivring-Antriebseinheit 51 mit den Objektiv-Stellmotoren 15, 17 und 19 übermittelt werden. Die Fernsteuereinheit 11 kann in gleicher Weise wie die Bewegtbildkamera 13 eine Aufnahmetaste 12, eine Steuerschaltung 14 und eine optische (und/oder akustische und/oder haptische) Ausgabeeinrichtung 52 umfassen.

Die Steuerschaltung 14 der Bewegtbildkamera 13 und/oder die Steuerschaltung 14 der Fernsteuereinheit 11 kann dazu ausgebildet sein, wahlweise einen Normalaufnahmemodus oder einen Endklappenmodus einzunehmen. Die beiden Modi unterscheiden sich in der Weise, wie eine Beendigung einer Bewegtbildaufnahme herbeigeführt werden kann.

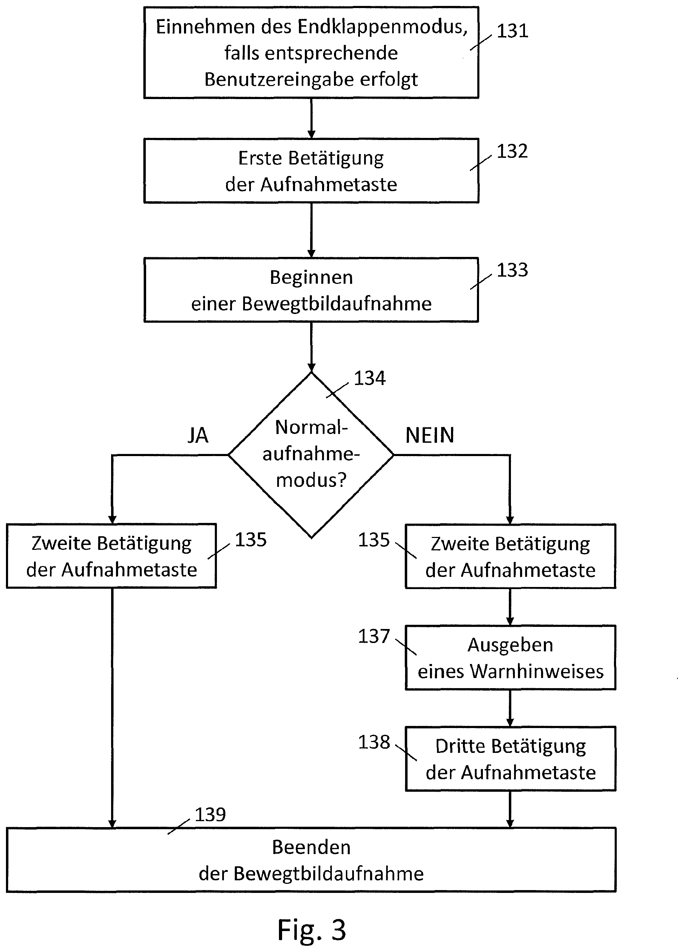

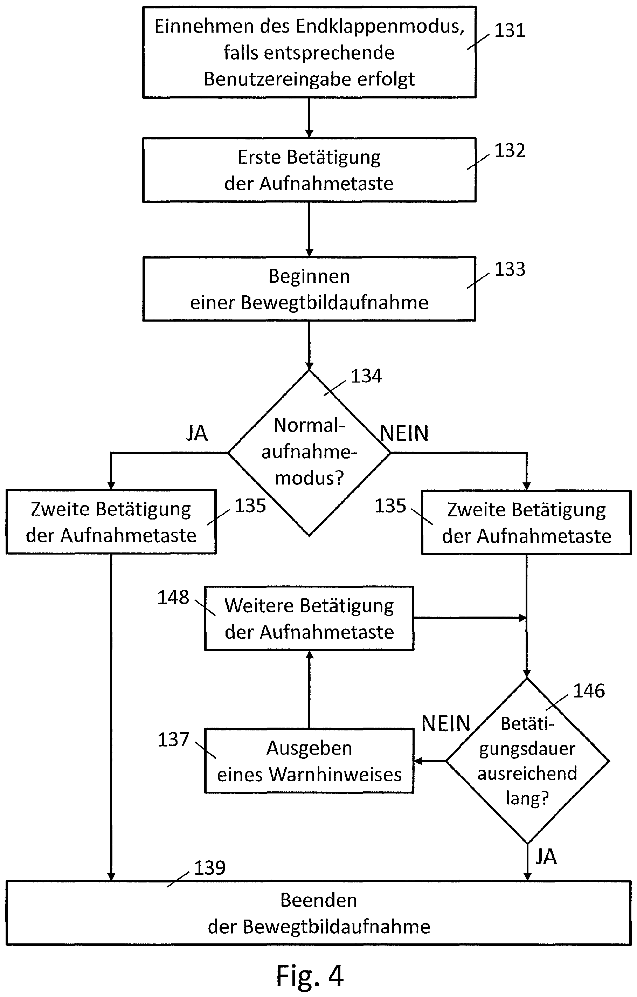

Mit weiterem Bezug auf Fig. 3 und 4 ist die Steuerschaltung 14 der Bewegtbildkamera 13 und/oder die Steuerschaltung 14 der Fernsteuereinheit 11 derart ausgebildet, dass in Ansprechen auf eine erste Betätigung 132 der Aufnahmetaste 12 ein Beginn 133 einer Bewegtbildaufnahme veranlasst wird. Mit dem ersten Betätigen 132 der Aufnahmetaste 12 erfolgt durch eine Benutzereingabe 131 eine Auswahl, ob ein Normalaufnahmemodus oder ein Endklappenmodus eingenommen werden soll. Die Benutzereingabe 131 erfolgt über die Aufnahmetaste 12.

Die Steuerschaltung 14 ist weiter dazu ausgebildet, in dem Normalaufnahmemodus in Ansprechen auf eine zweite Betätigung 135 der Aufnahmetaste 12 grundsätzlich eine Beendigung 139 der Bewegtbildaufnahme zu veranlassen. Die Steuerschaltung 14 ist weiter dazu ausgebildet, in dem Endklappenmodus eine Beendigung 139 der Bewegtbildaufnahme hingegen lediglich dann zu veranlassen, wenn zunächst eine zweite Betätigung 135 der Aufnahmetaste 12 und danach eine dritte Betätigung 138 der Aufnahmetaste 12 erfolgt (erster Erfindungsaspekt), oder in dem Endklappenmodus eine Beendigung 139 der Bewegtbildaufnahme lediglich dann zu veranlassen, wenn die Dauer einer zweiten Betätigung 135 der Aufnahmetaste 12 (oder ggf. weiteren Betätigung 148 der Aufnahmetaste) ausreichend lang ist, insbesondere länger als die im Normalaufnahmemodus vorgesehene und ausreichende Betätigungsdauer (zweiter Erfindungsaspekt). Bei beiden Erfindungsaspekten ergibt sich der Vorteil, dass in dem Endklappenmodus nach dem Aufnehmen der eigentlichen Bewegtbildsequenz das Aufnehmen der Endklappe nicht versehentlich, nämlich durch vorzeitige Beendigung der Bewegtbildaufnahme, vergessen wird. Vielmehr muss eine außergewöhnliche zweite Betätigung 135 oder zusätzliche Betätigung 148 der Aufnahmetaste 12 erfolgen, um die Bewegtbildaufnahme zu beenden, was eine bewusste Handlung des Benutzers erfordert. Somit kann innerhalb derselben Bewegtbildaufnahme wie die eigentliche Bewegtbildsequenz zuverlässig die Endklappe erfasst werden.

Die Steuerschaltung 14 kann darüber hinaus derart ausgebildet sein, dass in dem Endklappenmodus nach der zweiten Betätigung 135 oder nach einer zu kurzen zweiten Betätigung 135 oder weiteren Betätigung 148 der Aufnahmetaste 12 ein Warnsignal erzeugt wird und dieses Warnsignal in Form eines optischen, akustischen oder haptischen Warnhinweises an der Ausgabeeinrichtung 52 (Fig. 1 und 2) ausgegeben oder an der Anzeigeeinrichtung 47 (Fig. 2) angezeigt wird.

Fig. 3 zeigt ein Flussdiagramm für ein beispielhaftes Verfahren zum Steuern einer Bewegtbildkamera gemäß dem ersten Erfindungsaspekt. In einem Ausgangszustand kann ein Normalaufnahmemodus oder ein Endklappenmodus eingenommen werden, falls eine entsprechende Benutzereingabe erfolgt (Schritt 131), wobei als Voreinstellung der Normalaufnahmemodus vorgesehen sein kann und lediglich infolge einer speziellen Benutzereingabe 131 der Endklappenmodus eingenommen wird. Die Benutzereingabe 131 entspricht der ersten Betätigung 132 der Aufnahmetaste 12 (außergewöhnlich lang andauernde erste Betätigung 132 der Aufnahmetaste 12). Nach der ersten Betätigung 132 der Aufnahmetaste 12 kann eine Bewegtbildaufnahme beginnen (Schritt 133). In einem Schritt 134 erfolgt eine Abfrage, ob der Normalaufnahmemodus eingenommen ist. Ist der Normalaufnahmemodus eingenommen, so kann eine zweite Betätigung 135 der Aufnahmetaste 12 zu einem Beenden 139 der Bewegtbildaufnahme führen. Ist hingegen der Normalaufnahmemodus nicht eingenommen, d.h. die Abfrage 134 wird verneint, so ist der Endklappenmodus eingenommen.

Eine zweite Betätigung 135 der Aufnahmetaste 12 führt im Endklappenmodus nicht direkt zu einem Beenden 139 der Bewegtbildaufnahme. Stattdessen kann in einem Schritt 137 nach der zweiten Betätigung 135 der Aufnahmetaste 12 zunächst ein Warnhinweis ausgegeben werden. Der Warnhinweis kann den Benutzer daran erinnern, dass der Endklappenmodus eingenommen ist und die Bewegtbildaufnahme durch die zweite Betätigung 135 der Aufnahmetaste 12 nicht beendet wurde. Zu diesem Zeitpunkt kann also die Synchronklappe oder Tafel mit den Identifizierungsinformationen in das Sichtfeld der Bewegtbildkamera gehalten werden. Erst nach einer dritten Betätigung 138 der Aufnahmetaste 12 erfolgt ein Beenden 139 der Bewegtbildaufnahme, wobei gemäß einer Ausführungsform auch vorgesehen sein kann, dass diese dritte Betätigung 138 außergewöhnlich lang andauern muss.

Nach dem Beenden 139 der Bewegtbildaufnahme kann der Endklappenmodus automatisch ausgeschaltet werden, sodass vor dem nächsten Betätigen der Aufnahmetaste 12 erneut durch eine Benutzereingabe 131 ein Einnehmen des Normalaufnahmemodus oder des Endklappenmodus auszuwählen ist. Alternativ kann nach dem automatischen Beenden des Endklappenmodus der Normalaufnahmemodus voreingestellt werden.

Fig. 4 zeigt ein Flussdiagramm für ein Verfahren zum Steuern einer Bewegtbildkamera gemäß dem zweiten Erfindungsaspekt. Die in Fig. 3 beschriebenen Schritte des Einnehmens 131 des Endklappenmodus, der ersten Betätigung der Aufnahmetaste (Schritt 132), des Beginnens der Bewegtbildaufnahme (Schritt 133) und der Abfrage 134, ob der Normalaufnahmemodus eingenommen ist, können identisch sein. Auch in diesem alternativen Verfahren kann im Normalaufnahmemodus durch eine zweite (relativ kurze) Betätigung 135 der Aufnahmetaste 12 das Beenden 139 der Bewegtbildaufnahme bewirkt werden.

Falls jedoch der Endklappenmodus eingenommen ist, kann bei oder nach einer zweiten Betätigung 135 der Aufnahmetaste 12 eine Abfrage 146 der Betätigungsdauer der Aufnahmetaste 12 erfolgen. Die erfasste Betätigungsdauer der Aufnahmetaste 12 kann mit einem Schwellenwert (sogenannte vorbestimmte Langbetätigungsdauer) verglichen werden. Ist die Dauer der zweiten Betätigung 135 ausreichend lang, d.h. wurde die zweite Betätigung 135 der Aufnahmetaste 12 mindestens für die vorbestimmte Langbetätigungsdauer durchgeführt, so erfolgt in dem Schritt 139 das Beenden der Bewegtbildaufnahme. Andernfalls, wenn die zweite Betätigung 135 der Aufnahmetaste 12 nicht für die vorbestimmte Langbetätigungsdauer, sondern kürzer durchgeführt wurde, wird in einem Schritt 137 ein Warnhinweis ausgegeben. Der Warnhinweis kann den Benutzer daran erinnern, dass der Endklappenmodus eingenommen ist und dass für ein Beenden 139 der Bewegtbildaufnahme eine weitere Betätigung 148 der Aufnahmetaste mit mindestens einer Betätigungsdauer größer der vorbestimmten Langbetätigungsdauer nötig ist. Zu diesem Zeitpunkt kann also die Synchronklappe oder Tafel mit den Identifizierungsinformationen in das Sichtfeld der Bewegtbildkamera gehalten werden. Erst wenn eine weitere Betätigung 148 der Aufnahmetaste mit mindestens einer Betätigungsdauer größer der vorbestimmten Langbetätigungsdauer erfolgt ist, wird die Abfrage 146 bejaht und es erfolgt ein Beenden 139 der Bewegtbildaufnahme.

Nach dem Beenden 139 der Bewegtbildaufnahme kann der Endklappenmodus automatisch ausgeschaltet werden, sodass vor dem nächsten Betätigen der Aufnahmetaste 12 erneut durch eine Benutzereingabe 131 ein Einnehmen des Normalaufnahmemodus oder des Endklappenmodus auszuwählen ist. Alternativ kann nach dem automatischen Beenden des Endklappenmodus der Normalaufnahmemodus voreingestellt werden.

### Bezugszeichenliste

- 11: Fernsteuereinheit
- 12: Aufnahmetaste
- 13: Bewegtbildkamera
- 14: Steuerschaltung
- 15: erster Objektiv-Stellmotor
- 16: erster Objektivring
- 17: zweiter Objektiv-Stellmotor
- 18: zweiter Objektivring
- 19: dritter Objektiv-Stellmotor
- 20: dritter Objektivring
- 21: Bedienelement
- 45: Basisteil
- 47: Anzeigeeinrichtung
- 49: Wechselobjektiv
- 51: Objektivring-Antriebseinheit
- 52: Ausgabeeinrichtung
- 53: Sucher
- 55: Kamerakörper
- 131: Benutzereingabe
- 132: erste Betätigung der Aufnahmetaste
- 133: Beginnen einer Bewegtbildaufnahme
- 134: Abfrage Normalaufnahmemodus
- 135: zweite Betätigung der Aufnahmetaste
- 137: Ausgeben eines Warnhinweises
- 138: dritte Betätigung der Aufnahmetaste
- 139: Beenden der Bewegtbildaufnahme
- 146: Abfrage der Betätigungsdauer
- 148: weitere Betätigung der Aufnahmetaste

## Patentansprüche

1. Steuereinrichtung für eine Bewegtbildkamera (13), die eine Aufnahmetaste (12) und eine mit der Aufnahmetaste (12) verbundene Steuerschaltung (14) aufweist, wobei die Steuerschaltung (14) dazu ausgebildet ist,
- in Ansprechen auf eine erste Betätigung (132) der Aufnahmetaste (12) einen Beginn einer Bewegtbildaufnahme (133) zu veranlassen;
- in einem Normalaufnahmemodus in Ansprechen auf eine zweite Betätigung (135) der Aufnahmetaste (12) eine Beendigung (139) der Bewegtbildaufnahme zu veranlassen; und
- in einem Endklappenmodus eine Beendigung (139) der Bewegtbildaufnahme hingegen lediglich dann zu veranlassen, wenn zunächst eine zweite Betätigung (135) der Aufnahmetaste (12) und danach eine dritte Betätigung (138) der Aufnahmetaste (12) erfolgt;
wobei die Steuerschaltung (14) dazu ausgebildet ist, für eine jeweilige Bewegtbildaufnahme wahlweise den Normalaufnahmemodus oder den Endklappenmodus einzunehmen,
wobei die Steuerschaltung (14) dazu ausgebildet ist, in Ansprechen auf eine Benutzereingabe (131), die der ersten Betätigung (132) der Aufnahmetaste (12) entspricht, wahlweise den Endklappenmodus einzunehmen, wobei die Steuerschaltung (14) dazu ausgebildet ist, ausgehend von einem Bereitschaftszustand in Ansprechen auf die erste Betätigung (132) der Aufnahmetaste (12) den Normalaufnahmemodus einzunehmen, wenn die Dauer der ersten Betätigung (132) kürzer ist als eine vorbestimmte Langbetätigungsdauer, und hingegen den Endklappenmodus einzunehmen, wenn die Dauer der ersten Betätigung (132) mindestens der vorbestimmten Langbetätigungsdauer entspricht.

2. Steuereinrichtung nach Anspruch 1,
wobei die Steuerschaltung (14) dazu ausgebildet ist, in dem Endklappenmodus in Ansprechen auf die zweite Betätigung (135) der Aufnahmetaste (12) ein Warnsignal zu erzeugen,
wobei die Steuereinrichtung insbesondere eine optische, akustische oder haptische Ausgabeeinrichtung (52) aufweist, die dazu ausgebildet ist, in Ansprechen auf das Warnsignal einen optischen, akustischen oder haptischen Warnhinweis auszugeben.

3. Steuereinrichtung nach einem der vorhergehenden Ansprüche,
wobei die Steuerschaltung (14) dazu ausgebildet ist, in dem Endklappenmodus die Beendigung (139) der Bewegtbildaufnahme lediglich dann zu veranlassen, wenn die Dauer der dritten Betätigung (138) oder einer weiteren Betätigung (148) der Aufnahmetaste (12) mindestens einer relativ langen Betätigungsdauer entspricht, die größer ist als eine relativ kurze Betätigungsdauer, welche in dem Normalaufnahmemodus ausreichend ist, damit die zweite Betätigung (135) der Aufnahmetaste (12) die Beendigung (139) der Bewegtbildaufnahme bewirkt.

4. Steuereinrichtung für eine Bewegtbildkamera (13), die eine Aufnahmetaste (12) und eine mit der Aufnahmetaste (12) verbundene Steuerschaltung (14) aufweist, wobei die Steuerschaltung (14) dazu ausgebildet ist,
- in Ansprechen auf eine erste Betätigung (132) der Aufnahmetaste (12) einen Beginn einer Bewegtbildaufnahme (133) zu veranlassen;
- in einem Normalaufnahmemodus in Ansprechen auf eine zweite Betätigung (135) der Aufnahmetaste (12) eine Beendigung (139) der Bewegtbildaufnahme zu veranlassen, wobei es ausreichend ist, wenn die Dauer der zweiten Betätigung (135) einer vorbestimmten Kurzbetätigungsdauer entspricht; und
- in einem Endklappenmodus eine Beendigung (139) der Bewegtbildaufnahme in Ansprechen auf eine zweite (135) oder weitere Betätigung (148) der Aufnahmetaste (12) hingegen lediglich dann zu veranlassen, wenn die Dauer der zweiten (135) oder weiteren Betätigung (148) mindestens einer vorbestimmten Langbetätigungsdauer entspricht, die größer ist als die vorbestimmte Kurzbetätigungsdauer;
wobei die Steuerschaltung (14) dazu ausgebildet ist, für eine jeweilige Bewegtbildaufnahme wahlweise den Normalaufnahmemodus oder den Endklappenmodus einzunehmen,
wobei die Steuerschaltung (14) dazu ausgebildet ist, in Ansprechen auf eine Benutzereingabe (131), die der ersten Betätigung (132) der Aufnahmetaste (12) entspricht, wahlweise den Endklappenmodus einzunehmen, wobei die Steuerschaltung (14) dazu ausgebildet ist, ausgehend von einem Bereitschaftszustand in Ansprechen auf die erste Betätigung (132) der Aufnahmetaste (12) den Normalaufnahmemodus einzunehmen, wenn die Dauer der ersten Betätigung (132) kürzer ist als die vorbestimmte Langbetätigungsdauer, und hingegen den Endklappenmodus einzunehmen, wenn die Dauer der ersten Betätigung (132) mindestens der vorbestimmten Langbetätigungsdauer entspricht.

5. Steuereinrichtung nach Anspruch 4,
wobei die Steuerschaltung (14) dazu ausgebildet ist, in dem Endklappenmodus in Ansprechen auf die zweite (135) oder weitere Betätigung (148) der Aufnahmetaste (12) ein Warnsignal zu erzeugen, wenn die Dauer der zweiten (135) oder weiteren Betätigung (148) kürzer ist als die vorbestimmte Langbetätigungsdauer,
wobei die Steuereinrichtung insbesondere eine optische, akustische oder haptische Ausgabeeinrichtung (52) aufweist, die dazu ausgebildet ist, in Ansprechen auf das Warnsignal einen optischen, akustischen oder haptischen Warnhinweis auszugeben.

6. Steuereinrichtung nach einem der vorhergehenden Ansprüche,
wobei die Steuereinrichtung dazu ausgebildet ist, ein Endklappenmodus-Anzeigesignal zu erzeugen, wenn die Steuereinrichtung den Endklappenmodus einnimmt.

7. Bewegtbildkamera (13), mit einer Steuereinrichtung nach einem der vorhergehenden Ansprüche,
wobei die Bewegtbildkamera (13) insbesondere einen elektronischen Bildsensor zum Erzeugen von Bildsignalen und einen Signalausgang und/oder einen Speicher zum Ausgeben oder Speichern der Bildsignale während der Bewegtbildaufnahme aufweist.

8. Fernsteuereinheit für eine Bewegtbildkamera (13), mit einer Steuereinrichtung nach einem der Ansprüche 1 bis 6,
wobei die Fernsteuereinheit insbesondere ein Basisteil (45) und ein relativ zu dem Basisteil (45) drehbares Bedienelement (21) aufweist, dessen Drehstellung einen Steuerbefehl für die Bewegtbildkamera (13) repräsentiert.

9. Verfahren zum Steuern einer Bewegtbildkamera (13), der eine Aufnahmetaste (12) zugeordnet ist, mit den Schritten:
- in Ansprechen auf eine erste Betätigung (132) der Aufnahmetaste (12) Beginnen (133) einer Bewegtbildaufnahme;
- falls ein Normalaufnahmemodus eingenommen ist, Beenden (139) der Bewegtbildaufnahme in Ansprechen auf eine zweite Betätigung (135) der Aufnahmetaste (12); und
- falls ein Endklappenmodus eingenommen ist, Beenden (139) der Bewegtbildaufnahme lediglich in Ansprechen auf eine zweite Betätigung (135) und eine nachfolgende dritte Betätigung (138) der Aufnahmetaste (12);
wobei für eine jeweilige Bewegtbildaufnahme wahlweise der Normalaufnahmemodus oder der Endklappenmodus eingenommen wird,
wobei in Ansprechen auf eine Benutzereingabe (131), die der ersten Betätigung (132) der Aufnahmetaste (12) entspricht, wahlweise der Endklappenmodus eingenommen wird,
wobei ausgehend von einem Bereitschaftszustand in Ansprechen auf die erste Betätigung (132) der Aufnahmetaste (12) der Normalaufnahmemodus eingenommen wird, wenn die Dauer der ersten Betätigung (132) kürzer ist als eine vorbestimmte Langbetätigungsdauer, und hingegen der Endklappenmodus eingenommen wird, wenn die Dauer der ersten Betätigung (132) mindestens der vorbestimmten Langbetätigungsdauer entspricht.

10. Verfahren zum Steuern einer Bewegtbildkamera (13), der eine Aufnahmetaste (12) zugeordnet ist, mit den folgenden Schritten:
- in Ansprechen auf eine erste Betätigung (132) der Aufnahmetaste (12) Beginnen (133) einer Bewegtbildaufnahme;
- falls ein Normalaufnahmemodus eingenommen ist, Beenden (139) der Bewegtbildaufnahme in Ansprechen auf eine zweite Betätigung (135) der Aufnahmetaste (12), wobei es ausreichend ist, wenn die Dauer der zweiten Betätigung (135) einer vorbestimmten Kurzbetätigungsdauer entspricht; und
- falls ein Endklappenmodus eingenommen ist, Beenden (139) der Bewegtbildaufnahme in Ansprechen auf eine zweite (135) oder weitere Betätigung (148) der Aufnahmetaste (12) lediglich dann, wenn die Dauer der zweiten (135) oder weiteren Betätigung (148) mindestens einer vorbestimmten Langbetätigungsdauer entspricht, die größer ist als die vorbestimmte Kurzbetätigungsdauer;
wobei für eine jeweilige Bewegtbildaufnahme wahlweise der Normalaufnahmemodus oder der Endklappenmodus eingenommen wird,
wobei in Ansprechen auf eine Benutzereingabe (131), die der ersten Betätigung (132) der Aufnahmetaste (12) entspricht, wahlweise der Endklappenmodus eingenommen wird,
wobei ausgehend von einem Bereitschaftszustand in Ansprechen auf die erste Betätigung (132) der Aufnahmetaste (12) der Normalaufnahmemodus eingenommen wird, wenn die Dauer der ersten Betätigung (132) kürzer ist als die vorbestimmte Langbetätigungsdauer, und hingegen der Endklappenmodus eingenommen wird, wenn die Dauer der ersten Betätigung (132) mindestens der vorbestimmten Langbetätigungsdauer entspricht.

## Claims

1. A control device for a motion picture camera (13), said control device having a record button (12) and a control circuit (14) connected to the record button (12), wherein the control circuit (14) is configured
- to cause a start of a motion picture recording (133) in response to a first actuation (132) of the record button (12);
- to cause a termination (139) of the motion picture recording in a normal recording mode in response to a second actuation (135) of the record button (12); and
- to cause a termination (139) of the motion picture recording in a tail slate mode, in contrast, only when first a second actuation (135) of the record button (12) takes place and then a third actuation (138) of the record button (12) takes place;
wherein the control circuit (14) is configured to selectively adopt the normal recording mode or the tail slate mode for a respective motion picture recording,
wherein the control circuit (14) is configured to selectively adopt the tail slate mode in response to a user input (131) which corresponds to the first actuation (132) of the record button (12),
wherein the control circuit (14) is configured, starting from a standby state, to adopt the normal recording mode in response to the first actuation (132) of the record button (12) when the duration of the first actuation (132) is shorter than a predetermined long actuation duration and, in contrast, to adopt the tail slate mode in response to the first actuation (132) of the record button (12) when the duration of the first actuation (132) at least corresponds to the predetermined long actuation duration.

2. A control device in accordance with claim 1,
wherein the control circuit (14) is configured to generate a warning signal in the tail slate mode in response to the second actuation (135) of the record button (12),
wherein the control device in particular comprises a visual, acoustic or haptic output device (52) which is configured to output a visual, acoustic or haptic warning message in response to the warning signal.

3. A control device in accordance with one of the preceding claims,
wherein the control circuit (14) is configured to cause the termination (139) of the motion picture recording in the tail slate mode only when the duration of the third actuation (138) or the duration of a further actuation (148) of the record button (12) at least corresponds to a relatively long actuation duration which is greater than a relatively short actuation duration, the relatively short actuation duration being sufficient in the normal recording mode so that the second actuation (135) of the record button (12) brings about the termination (139) of the motion picture recording.

4. A control device for a motion picture camera (13) which comprises a record button (12) and a control circuit (14) connected to the record button (12), wherein the control circuit (14) is configured
- to cause a start of a motion picture recording (133) in response to a first actuation (132) of the record button (12);
- to cause a termination (139) of the motion picture recording in a normal recording mode in response to a second actuation (135) of the record button (12), wherein it is sufficient if the duration of the second actuation (135) corresponds to a predetermined short actuation duration; and
- to cause a termination (139) of the motion picture recording in a tail slate mode in response to a second (135) or a further actuation (148) of the record button (12), in contrast, only when the duration of the second (135) or further actuation (148) at least corresponds to a predetermined long actuation duration which is greater than the predetermined short actuation duration;
wherein the control circuit (14) is configured to selectively adopt the normal recording mode or the tail slate mode for a respective motion picture recording,
wherein the control circuit (14) is configured to selectively adopt the tail slate mode in response to a user input (131) which corresponds to the first actuation (132) of the record button (12),
wherein the control circuit (14) is configured, starting from a standby state, to adopt the normal recording mode in response to the first actuation (132) of the record button (12) when the duration of the first actuation (132) is shorter than the predetermined long actuation duration and, in contrast, to adopt the tail slate mode in response to the first actuation (132) of the record button (12) when the duration of the first actuation (132) at least corresponds to the predetermined long actuation duration.

5. A control device in accordance with claim 4,
wherein the control circuit (14) is configured to generate a warning signal in the tail slate mode in response to the second (135) or further actuation (148) of the record button (12) when the duration of the second (135) or further actuation (148) is shorter than the predetermined long actuation duration,
wherein the control device in particular has a visual, acoustic or haptic output device (52) which is configured to output a visual, acoustic or haptic warning message in response to the warning signal.

6. A control device in accordance with any one of the preceding claims.
wherein the control device is configured to generate a tail slate mode indication signal when the control device adopts the tail slate mode.

7. A motion picture camera (13) comprising a control device in accordance with any one of the preceding claims,
wherein the motion picture camera (13) in particular has an electronic image sensor for generating image signals and a signal output and/or a memory for outputting or storing the image signals during the motion picture recording.

8. A remote control unit for a motion picture camera (13) comprising a control device in accordance with any one of the claims 1 to 6,
wherein the remote control unit in particular has a base part (45) and an operating element (21) which is rotatable relative to the base part (45) and whose rotational position represents a control command for the motion picture camera (13).

9. A method of controlling a motion picture camera (13) with which a record button (12) is associated, comprising the steps:
- starting (133) a motion picture recording in response to a first actuation (132) of the record button (12);
- if a normal recording mode is adopted, terminating (139) the motion picture recording in response to a second actuation (135) of the record button (12); and
- if a tail slate mode is adopted, terminating (139) the motion picture recording only in response to a second actuation (135) and a subsequent third actuation (138) of the record button (12),
wherein the normal recording mode or the tail slate mode is selectively adopted for a respective motion picture recording,
wherein the tail slate mode is selectively adopted in response to a user input (131) which corresponds to the first actuation (132) of the record button (12),
wherein, starting from a standby state, the normal recording mode is adopted in response to the first actuation (132) of the record button (12) when the duration of the first actuation (132) is shorter than a predetermined long actuation duration and, in contrast, the tail slate mode is adopted when the duration of the first actuation (132) at least corresponds to the predetermined long actuation duration.

10. A method of controlling a motion picture camera (13) with which a record button (12) is associated, comprising the following steps:
- starting (133) a motion picture recording in response to a first actuation (132) of the record button (12);
- if a normal recording mode is adopted, terminating (139) the motion picture recording in response to a second actuation (135) of the record button (12), wherein it is sufficient if the duration of the second actuation (135) corresponds to a predetermined short actuation duration; and
- if a tail slate mode is adopted, terminating (139) the motion picture recording in response to a second (135) or a further actuation (148) of the record button (12) only when the duration of the second (135) or further actuation (148) at least corresponds to a predetermined long actuation duration which is greater than the predetermined short actuation duration,
wherein the normal recording mode or the tail slate mode is selectively adopted for a respective motion picture recording, wherein the tail slate mode is selectively adopted in response to a user input (131) which corresponds to the first actuation (132) of the record button (12),
wherein, starting from a standby state, the normal recording mode is adopted in response to the first actuation (132) of the record button (12) when the duration of the first actuation (132) is shorter than the predetermined long actuation duration and, in contrast, the tail slate mode is adopted when the duration of the first actuation (132) at least corresponds to the predetermined long actuation duration.

## Revendications

1. Dispositif de commande pour une caméra à images animées (13), qui présente un bouton d'enregistrement (12) et un circuit de commande (14) connecté au bouton d'enregistrement (12), dans lequel le circuit de commande (14) est configuré pour,
- en réponse à un premier actionnement (132) du bouton d'enregistrement (12), provoquer un début d'un enregistrement d'images animées (133) ;
- dans un mode d'enregistrement normal, en réponse à un deuxième actionnement (135) du bouton d'enregistrement (12), provoquer une terminaison (139) de l'enregistrement d'images animées ; et
- dans un mode de clap de fin, en revanche, provoquer une terminaison (139) de l'enregistrement d'images animées uniquement si tout d'abord un deuxième actionnement (135) du bouton d'enregistrement (12), puis un troisième actionnement (138) du bouton d'enregistrement (12) ont lieu ;
dans lequel le circuit de commande (14) est configuré pour adopter au choix le mode d'enregistrement normal ou le mode de clap de fin pour un enregistrement d'images animées respectif,
dans lequel le circuit de commande (14) est configuré pour adopter au choix le mode de clap de fin en réponse à une entrée utilisateur (131) qui correspond au premier actionnement (132) du bouton d'enregistrement (12),
dans lequel le circuit de commande (14) est configuré pour, à partir d'un état de veille, adopter le mode d'enregistrement normal en réponse au premier actionnement (132) du bouton d'enregistrement (12), si la durée du premier actionnement (132) est plus courte qu'une durée d'actionnement longue prédéterminée, et, en revanche, adopter le mode de clap de fin si la durée du premier actionnement (132) correspond au moins à la durée d'actionnement longue prédéterminée.

2. Dispositif de commande selon la revendication 1,
dans lequel le circuit de commande (14) est configuré pour générer un signal d'avertissement dans le mode de clap de fin en réponse au deuxième actionnement (135) du bouton d'enregistrement (12),
dans lequel le dispositif de commande présente en particulier un dispositif de sortie optique, acoustique ou haptique (52) qui est configuré pour fournir une indication d'avertissement optique, acoustique ou haptique en réponse au signal d'avertissement.

3. Dispositif de commande selon l'une des revendications précédentes,
dans lequel le circuit de commande (14) est configuré pour provoquer la terminaison (139) de l'enregistrement d'images animées dans le mode de clap de fin uniquement si la durée du troisième actionnement (138) ou d'un actionnement supplémentaire (148) du bouton d'enregistrement (12) correspond au moins à une durée d'actionnement relativement longue qui est supérieure à une durée d'actionnement relativement courte qui est suffisante dans le mode d'enregistrement normal pour que le deuxième actionnement (135) du bouton d'enregistrement (12) provoque la terminaison (139) de l'enregistrement d'images animées.

4. Dispositif de commande pour une caméra à images animées (13), qui présente un bouton d'enregistrement (12) et un circuit de commande (14) connecté au bouton d'enregistrement (12), dans lequel le circuit de commande (14) est configuré pour,
- en réponse à un premier actionnement (132) du bouton d'enregistrement (12), provoquer un début d'un enregistrement d'images animées (133) ;
- dans un mode d'enregistrement normal, en réponse à un deuxième actionnement (135) du bouton d'enregistrement (12), provoquer une terminaison (139) de l'enregistrement d'images animées, dans lequel il est suffisant que la durée du deuxième actionnement (135) corresponde à une durée d'actionnement courte prédéterminée ; et
- dans un mode de clap de fin, provoquer une terminaison (139) de l'enregistrement d'images animées en réponse à un deuxième (135) ou à un actionnement supplémentaire (148) du bouton d'enregistrement (12) uniquement si la durée du deuxième (135) ou de l'actionnement supplémentaire (148) correspond au moins à une durée d'actionnement longue prédéterminée qui est supérieure à la durée d'actionnement courte prédéterminée ;
dans lequel le circuit de commande (14) est configuré pour adopter au choix le mode d'enregistrement normal ou le mode de clap de fin pour un enregistrement d'images animées respectif,
dans lequel le circuit de commande (14) est configuré pour adopter au choix le mode de clap de fin en réponse à une entrée utilisateur (131) qui correspond au premier actionnement (132) du bouton d'enregistrement (12),
dans lequel le circuit de commande (14) est configuré pour, à partir d'un état de veille, adopter le mode d'enregistrement normal en réponse au premier actionnement (132) du bouton d'enregistrement (12), si la durée du premier actionnement (132) est plus courte que la durée d'actionnement longue prédéterminée, et, en revanche, adopter le mode de clap de fin si la durée du premier actionnement (132) correspond au moins à la durée d'actionnement longue prédéterminée.

5. Dispositif de commande selon la revendication 4,
dans lequel le circuit de commande (14) est configuré pour générer un signal d'avertissement dans le mode de clap de fin en réponse au deuxième actionnement (135) ou à l'actionnement supplémentaire (148) du bouton d'enregistrement (12), si la durée du deuxième actionnement (135) ou de l'actionnement supplémentaire (148) est plus courte que la durée d'actionnement longue prédéterminée,
dans lequel le dispositif de commande présente en particulier un dispositif de sortie optique, acoustique ou haptique (52) qui est configuré pour fournir une indication d'avertissement optique, acoustique ou haptique en réponse au signal d'avertissement.

6. Dispositif de commande selon l'une des revendications précédentes,
dans lequel le dispositif de commande est configuré pour générer un signal d'indication de mode de clap de fin lorsque le dispositif de commande adopte le mode de clap de fin.

7. Caméra à images animées (13), avec un dispositif de commande selon l'une des revendications précédentes,
dans laquelle la caméra à images animées (13) présente en particulier un capteur d'image électronique destiné à générer des signaux d'image et une sortie de signal et/ou une mémoire destinée à fournir ou à stocker les signaux d'image pendant l'enregistrement d'images animées.

8. Unité de télécommande pour une caméra à images animées (13), avec un dispositif de commande selon les revendications 1 à 6,
dans laquelle l'unité de télécommande présente en particulier une partie de base (45) et un élément de commande (21) rotatif par rapport à la partie de base (45), dont la position de rotation représente une instruction de commande pour la caméra à images animées (13).

9. Procédé pour commander une caméra à images animées (13), à laquelle est associé un bouton d'enregistrement (12), comprenant les étapes consistant à :
- en réponse à un premier actionnement (132) du bouton d'enregistrement (12), démarrer (133) un enregistrement d'images animées ;
- si un mode d'enregistrement normal est adopté, terminer (139) l'enregistrement d'images animées en réponse à un deuxième actionnement (135) du bouton d'enregistrement (12) ; et
- si un mode de clap de fin est adopté, terminer (139) l'enregistrement d'images animées uniquement en réponse à un deuxième actionnement (135) et à un troisième actionnement (138) suivant du bouton d'enregistrement (12) ;
dans lequel le mode d'enregistrement normal ou le mode de clap de fin est adopté au choix pour un enregistrement d'images animées respectif,
dans lequel le mode de clap de fin est adopté au choix en réponse à une entrée utilisateur (131) qui correspond au premier actionnement (132) du bouton d'enregistrement (12),
dans lequel, à partir d'un état de veille, le mode d'enregistrement normal est adopté en réponse au premier actionnement (132) du bouton d'enregistrement (12), si la durée du premier actionnement (132) est plus courte qu'une durée d'actionnement longue prédéterminée, et, en revanche, le mode de clap de fin est adopté si la durée du premier actionnement (132) correspond au moins à la durée d'actionnement longue prédéterminée.

10. Procédé pour commander une caméra à images animées (13), à laquelle est associé un bouton d'enregistrement (12), comprenant les étapes suivantes consistant à :
- en réponse à un premier actionnement (132) du bouton d'enregistrement (12), démarrer (133) un enregistrement d'images animées ;
- si un mode d'enregistrement normal est adopté, terminer (139) l'enregistrement d'images animées en réponse à un deuxième actionnement (135) du bouton d'enregistrement (12), dans lequel il est suffisant que la durée du deuxième actionnement (135) corresponde à une durée d'actionnement courte prédéterminée ; et
- si un mode de clap de fin est adopté, terminer (139) l'enregistrement d'images animées en réponse à un deuxième actionnement (135) ou à un actionnement supplémentaire (148) du bouton d'enregistrement (12) uniquement si la durée du deuxième actionnement (135) ou de l'actionnement supplémentaire (148) correspond au moins à une durée d'actionnement longue prédéterminée qui est supérieure à la durée d'actionnement courte prédéterminée ;
dans lequel le mode d'enregistrement normal ou le mode de clap de fin est adopté au choix pour un enregistrement d'images animées respectif,
dans lequel le mode de clap de fin est adopté au choix en réponse à une entrée utilisateur (131) qui correspond au premier actionnement (132) du bouton d'enregistrement (12),
dans lequel, à partir d'un état de veille, le mode d'enregistrement normal est adopté en réponse au premier actionnement (132) du bouton d'enregistrement (12), si la durée du premier actionnement (132) est plus courte que la durée d'actionnement longue prédéterminée, et, en revanche, le mode de clap de fin est adopté si la durée du premier actionnement (132) correspond au moins à la durée d'actionnement longue prédéterminée.
